# EUROPEAN PATENT SPECIFICATION

(11) **EP 0 991 211 B1**
(45) Date of publication and mention of the grant of the patent: **24.05.2006**
(21) Application number: 99119286.5
(22) Date of filing: 28.09.1999
(51) Int. Cl.: H04B 17/00

(54) **Device and method of determining quality of radio communication in a mobile communication system**
Vorrichtung und Verfahren zur Bestimmung der Funksübertragungsqualität in einem mobilen Kommunikationssystem
Dispositif et procédé pour déterminer la qualité de la communication radio dans un système de communication mobile

(30) Priority: 28.09.1998 JP 27311298
(43) Date of publication of application: 05.04.2000
(73) Proprietor: NEC CORPORATION, Tokyo (JP)
(72) Inventor: Uchikawa, Kiyoshi, Minato-ku, Tokyo (JP); Endou, Hiroya, Minato-ku, Tokyo (JP)
(74) Representative: Betten & Resch

(56) References cited:
- EP-A- 0 599 515
- WO-A-96/20548
- GB-A- 2 297 885

## Description

### BACKGROUND OF THE INVENTION:

### Field of the Invention

The invention relates to a mobile communication system which employs CDMA (Code Division Multiple Access) and in particular, to device and method of determining whether or not quality degradation of radio network occurs.

### Description of the Related Art

In the past, there is a method which is used in a radio base station and which determines whether or not quality degradation of radio network occurs by using information which includes status "OK" or "No Good (NG) " each of which represents a result of CRC (Cyclic Redundancy Check) of data (messages), such as cells, given from the radio base station.

In such a method, CRC operations are carried out over a certain width of window to obtain results. In addition, the number of data (cells) which determined as "NG" in the CRC operations is detected, and the number is compared with a predetermined threshold value. Hereinafter, the cells determined as "NG" in the CRC operations are referred to as "NG-cells", and on the contrary, the cells determined as "OK" in the CRC operations are referred to as "OK-cells".

When the number of NG-cells is greater than or equal to the threshold value, it is determined that quality degradation of radio network occurs. Otherwise, it is determined that quality degradation does not occurs.

That is, in the method, the number of NG-cells is counted among a certain number of cells, and when the resulting number is greater than or equal to the predetermined value, it is determined that the quality degradation occurs.

There is also a previous radio network quality monitoring device which employs the method. The device simply stores a reception history of the OK-cells and the NG-cells based on a window width, and determines quality degradation of radio network by using the stored reception history.

In this case, however, the device must prepare an amount of memory which can store all of the reception history of calls in the maximum window width. Furthermore, the device is inefficient from points of view of scale of circuit and performance, since the device, in every time the device receives the data (cell), counts the number of NG-cells and determines whether or not the number exceeds the threshold value.

There may be another previous radio network quality monitoring device which individually includes OK-cells receiving counter and NG-cells receiving counter for each line and which determines the quality degradation of radio network from a value of the NG-cells counted by the receiving counter at the point when an NG-cell is received. The device, however, is also inefficient since operation of one of the receiving counters is required whenever a cell is received at any line.

WO 96/20548 describes a network fault monitoring method comprising establishing a scan intervall and an analysis period equal to a plurality of scan intervalls, monitoring the telecommunication system continously for the occurrence of faults and storing their times of occurrence in a memory. At the end of each scan intervall the number of occurrences of fault during the analysis period, which ends at the end of the scan intervall, is counted by a counter. If the number of occurrences of the fault in the analysis period is equal or greater than a threshold value, an alarm indicator is activated.

### SUMMARY OF THE INVENTION:

Therefore, it is an object of the invention to provide a device and a method of determining quality degradation of radio network which can reduce processing load for the determination by decreasing the frequency of the processing for the determination.

According to a first aspect of the invention, a method of determining quality degradation of a radio network according to claim 1, according to a second aspect a device of determining quality degradation of a radio network according to claim 6 and as a third aspect of the invention a computer readable medium according to claim 11 is provided.

### BRIEF DESCRIPTION OF THE DRAWINGS:

Fig. 1 schematically shows a block diagram of the previous upstream combining device;
Fig. 2 shows a block diagram of a base station controlling device 400 according to an embodiment of the invention;
Fig. 3 schematically shows a block diagram of an upstream combining device 500 shown in Fig. 2;
Fig. 4 shows a layout of a determination table 200;
Fig. 5 shows a flowchart representing operations of determining quality degradation of radio network of the invention;
Fig. 6A shows am example of timing chart of receiving cells;
Figs. 6B-6G show examples of contents of the determination table 200 at the timings shown in Fig. 6A.

### DESCRIPTION OF THE PREFERRED EMBODIMENT:

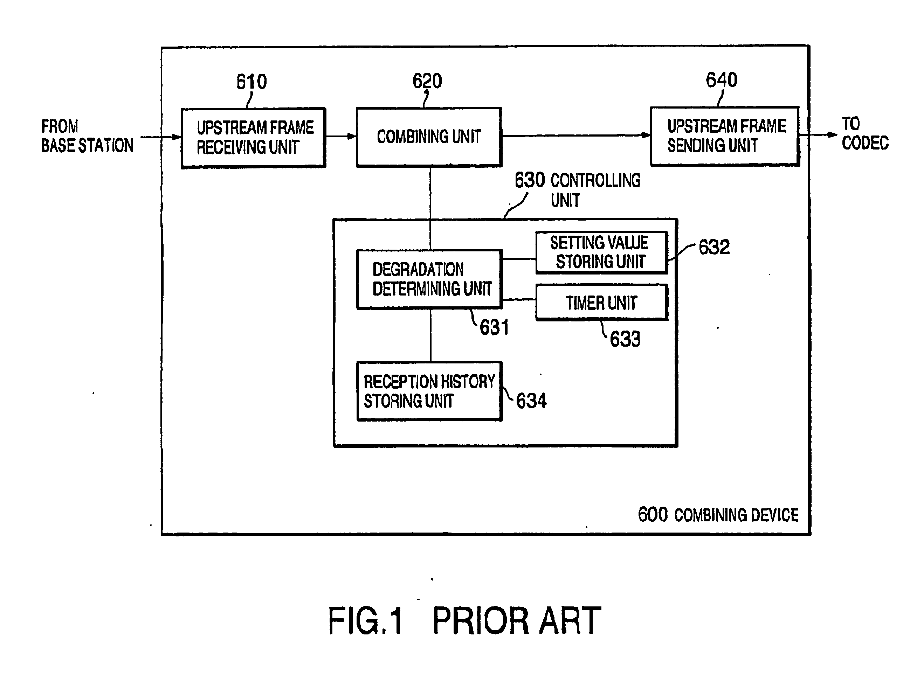

At first, the previous device of monitoring quality of radio network is described with reference to Fig. 1. Fig. 1 shows a configuration of a previous upstream combining device 600. The upstream combining device 600 is located in a base station controlling device and monitors the quality degradation of radio network.

The device 600 includes an upstream frame receiving unit 610, a combining unit 620, a controlling unit 630, and an upstream frame sending unit 640. The controlling unit 630 further includes a degradation determining unit 631, a setting value storing unit 632, a timer unit 633, and a reception history storing unit 634.

The combining unit 620 informs the degradation determining unit 631 of a result of CRC operation whenever a cell is received. The timer unit 633 clocks the current time ,when the cell is received, and informs the degradation determining unit 631 of the current time. Thereafter, the degradation determining unit 631 stores the result of the CRC operation and the current time into the reception history storing unit 634. Then, the degradation determining unit 631 monitors quality of the radio network based on a degradation threshold value stored in the setting value storing unit 632 and the reception history stored in the reception history storing unit 634. Specifically, the degradation determining unit 631 refers to a predetermined number of recent results of CRC operations, calculates the ratio of NG-cells, and compares the ratio with the degradation threshold value to determines that quality of the radio network is degraded when the ratio exceeds the degradation threshold value.

Next, description is made about a device for monitoring quality of radio network of an embodiment of the invention. The device according to the invention executes determination operation only when NG-cells are received. They do nothing when OK-cell is reached. Thereby, the device may work more efficiently.

The device combines receiving data (cells) which are sent from one of radio base stations. When the received cell is NG-cell, the device stores the received time (or detected time) of the received NG-cell, calculates the difference between the received time and previously stored received time of preceding NG-cell, and determines a duration time between the receptions (or detections) of the NG-cells. Then the device estimates the number of consecutive receptions of the OK-cells by dividing the duration time by a cell receiving cycle, and stores the number into a determination table. Next, the device executes quality degradation determining operation whenever the NG-cell is received, after a predetermined number of NG-cells are received, that is, when the number of received NG-cells exceeds a determination threshold value.

In the quality degradation determining operation, the number of OK-cells received during reception of a certain number of NG-cells is calculated by using the determination table and the number of OK-cells is compared with the predetermined degradation threshold value.

The certain number for the NG-cells is defined by the determination threshold value. From the result of the comparison, quality degradation of the radio network is determined.

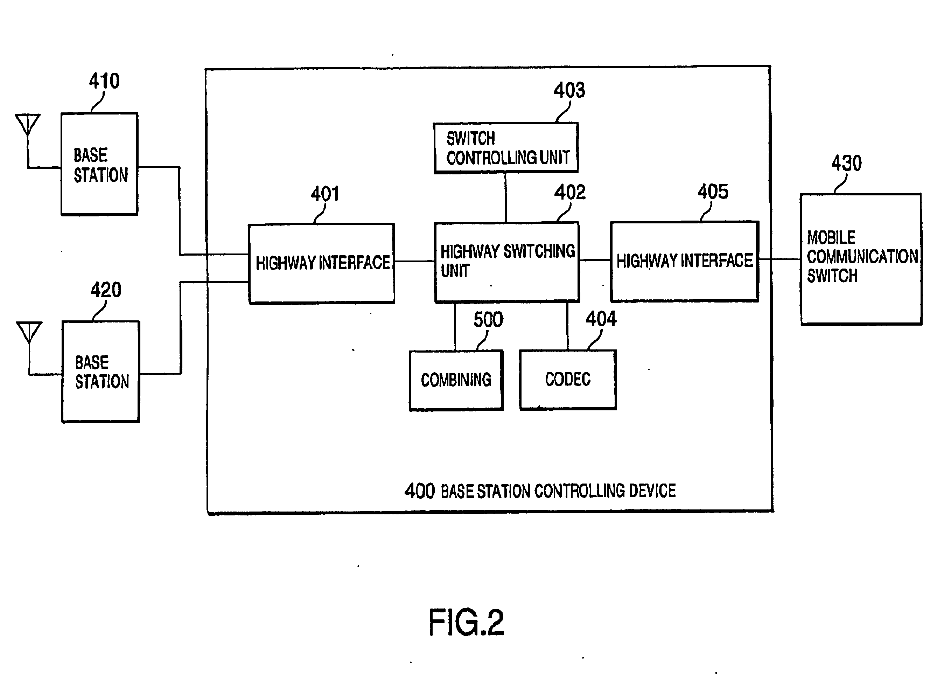

Referring to Fig.2, description is made about a base station controlling device which may employ a combining device of an embodiment of the invention.

The base station controlling device 400 is connected to radio base stations 410 and 420, and to a mobile communication switch 430. The base station controlling device 400 also includes the following elements.

A highway interface 401 connects between the base station controlling device 400 and the radio base stations 410 and 420. A highway switching unit 402 executes switching operation or connecting operation among elements in the base station controlling device 400. A switching controlling unit 403 controls the highway switching unit 402. An upstream combining device 500 has function which can combine received upstream signals and function which can determine quality degradation of radio network. A CODEC 404 carries out coding/decoding of voice signals. A highway interface 405 connects between the base station controlling device 400 and the mobile communication switch 430.

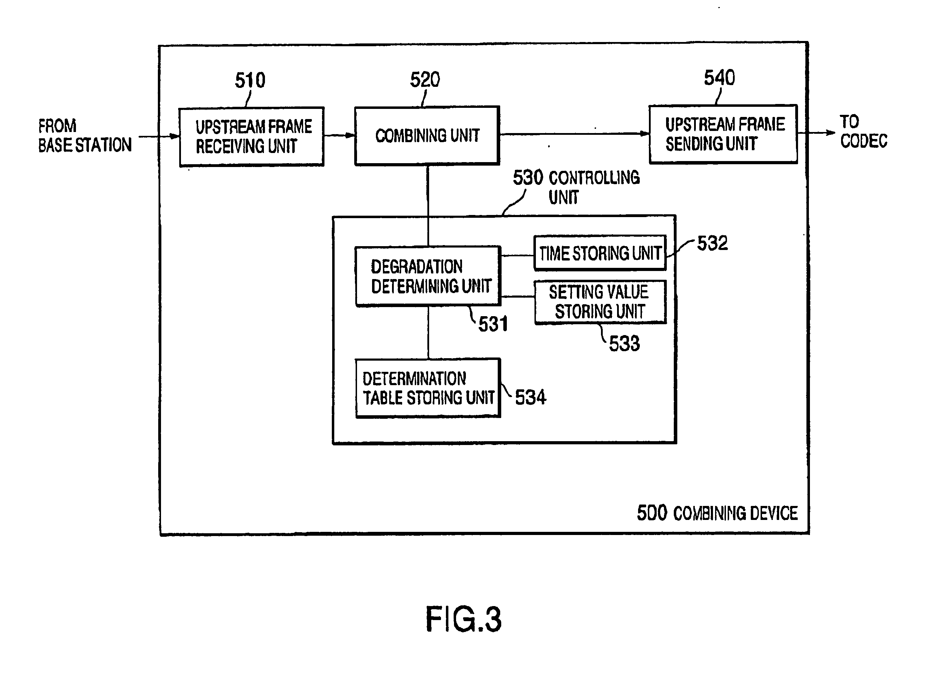

Next, the upstream combining device 500 is described in more detail with reference to Fig. 3.

The upstream combining device 500 receives upstream frames from the radio base stations 410 and 420, combines cells, and sends the cells to the next device, such as the CODEC 404. The upstream combining device 500 includes the following elements.

An upstream receiving unit 510 receives cells from the radio base station 410 and 420 and sends the cells to a combining unit 520.

The combining unit 520 is supplied with a sequence of receiving cells from the radio base stations 410 and 420 over a plurality of radio frames and selects the best quality of cell among receiving cells, which are received in the same radio frame period.

Also, the combining unit 520 determines whether radio CRC information of the selected call is "OK" or "NG", and informs a controlling unit 530 that NG-cell is received when the radio CRC information is "NG".

In the previous combining unit 620 shown in Fig. 1, regardless of the contents of the radio CRC information, the controlling unit 630 always receives the information. On the contrary, the combining unit 520 of the embodiment of the invention informs the controlling unit 530 of the information only when the information represents NG (hereinafter, referred to as NG information). Furthermore, the combining unit 520 has time information synchronizing with the radio frame, and informs the controlling unit 530 of a time of combining (or detecting) the NG-cell when the combining unit 520 informs of the NG information. It is not required that the time information is standard time, since the time information is used to determine the time difference between a time when the current NG-cell is combined/detected and a time when the previous NG-cell is combined/detected.

The controlling unit 530 includes a degradation determining unit 531, a time storing unit 532, a setting value storing unit 533 and a determination table storing unit 534. The degradation determining unit 531 executes determination operation of quality degradation of radio network as described later. The time storing unit 532 stores the time information which is received from the combining unit 520 along with the NG information. The setting value storing unit 533 stores a predetermined cell receiving cycle, the determination threshold value, and the degradation threshold value. The determination table storing unit 534 stores the determination table 200.

The upstream frame sending unit 540 sends a next device a received cell which is combined in the combining unit 520.

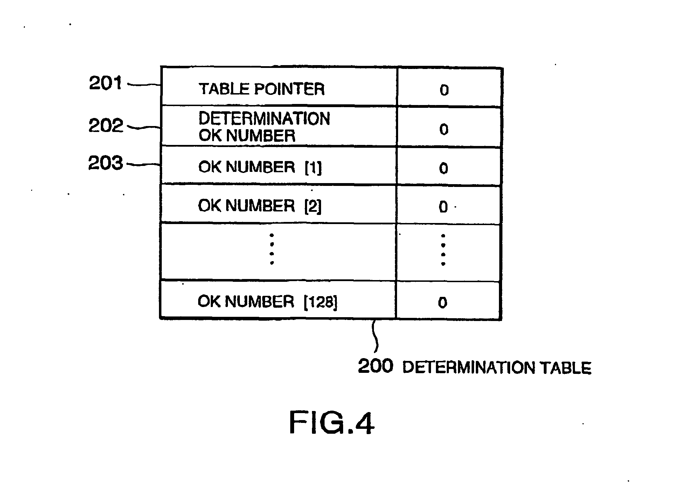

Next, description is made about a layout of the determination table 200 with reference to Fig. 4. The determination table 200 includes a table pointer field 201, a determination OK number field 202, and a plurality of OK number fields 203. The table pointer field 201 stores a number representing an entry of one of the OK number fields 203 in which an estimated OK number is recently stored. The determination OK number field 202 stores the number of OK-cells which is a sum of the numbers of OK-cells stored in a certain number (described later) of the OK number fields. Each of the OK number fields 203 stores a value which is obtained by dividing a duration time between a detection time of an NG-cell and a detection time of the next NG-cell in the cell receiving cycle. That is, the value stands for the number of OK-cells between the two consecutive NG-cells. In this example, the determination table 200 includes 128 entries of the OK number fields [1], [2], [3], ... [128].

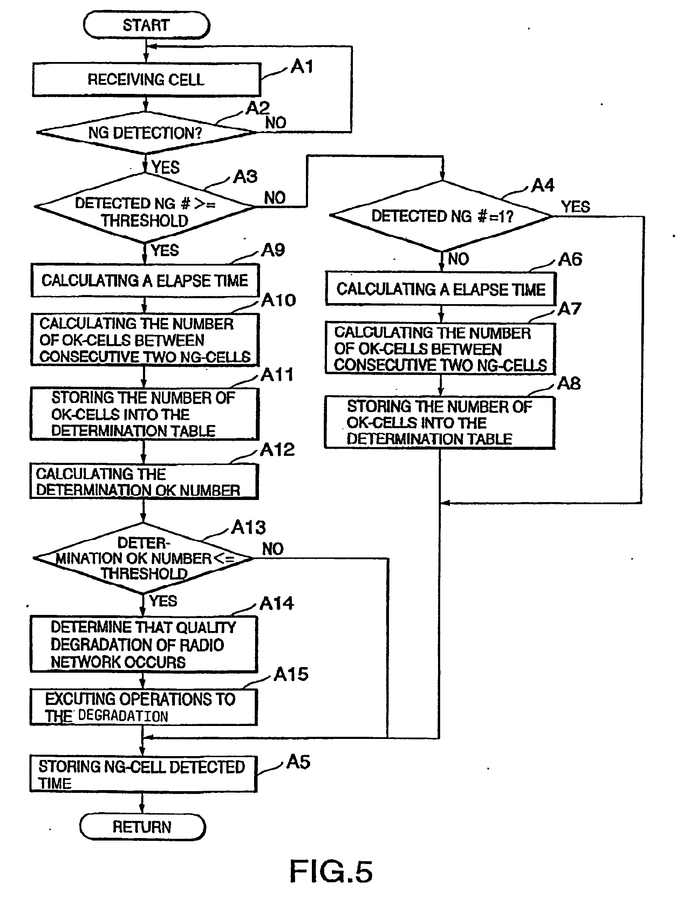

Next, description is made about the determining operation of quality degradation of radio network by the combining unit 520 and the controlling unit 530 with reference to Fig. 5.

The combining unit 520 shown in Fig. 3 informs the degradation determining unit 531 of the NG information, and time information which includes NG-cell detected time when it is determined that a received cell is the NG-cell (steps A1 and A2).

When the degradation determining unit 531 receives the NG information and the time information, the unit 531 determines whether or not the number of NG-cells which has been detected until now exceeds the determination threshold value by referring to the table pointer 201 stored in the determination table 200 and the determination threshold value stored in the setting value storing unit 533 (step A3).

In the case where the first NG-cell is received (step A4), the degradation determining unit 531 receives the time information from the combining unit 520 and stores the time information into the time storing unit 532 (step A5).

Thereafter, when the second NG-cell is received, the degradation determining unit 531 repeats the following operations (1) to (3) for each NG-cell reception while the number of the received NG-cells is less than the determination threshold value, to store the number of the OK-cells between the previous NG-cell and the current NG-cell into the corresponding OK number field in the determination table 200 and to store the time information which is received along with the current NG-cell into the time storing unit 532.

The operation (1) is for calculating a duration time from the time difference between the time when the current NG-cell is received from the combining unit 520 and the time which is stored in the time storing unit 532 and which is related to the reception of the previous NG-cell (step A6).

The operation (2) is for dividing the duration time by the cell receiving cycle to estimate the number of OK-cells which are received between the previous NG-cell and the current NG-cell (step A7).

The operation (3) is for storing the number of the OK-cells which is calculated in the above step (2) into the corresponding OK number field 203 in the determination table 200 (step A8). For example, when the second NG-cell is received, the number of the OK-cells is stored into an OK number [2] and when the third NG-cell is received, the number of the OK-cells is stored into an OK number [3].

Then, when the degradation determining unit 531 receives the same number of NG-cells as the determination threshold value, the unit 531 executes the same operations as the above operations (1) to (3) (steps A9 to A11) and sums up the numbers in the corresponding OK number fields 203 in the determination table 200 to obtain the determination OK number (step A12). For example, when the determination threshold value is set to four and the fourth NG-cell is received, the unit 531 sums up the numbers from the OK number [2] to the OK number [4].

In other words, numbers in plural entries of OK number fields 203 are successively summed up from a previous entry of the OK number fields 203 to the current entry of the OK number fields 203. The previous entry is given by decreasing the determination threshold value by two. The current entry is the entry to which the number of OK-cells is stored in response to reception of the currently received NG-cell.

Next, the unit 531 compares the obtained determination OK number with the predetermined degradation threshold value (step A13). If the determination OK number is less than or equal to the degradation threshold value, the unit 531 determines that quality degradation of radio network occurs (step A14). In this case, the unit 531 transmits the combining unit 500 of the quality degradation outside of the unit 531, and in response to the information, the base station controlling device 400 may direct each mobile station to provide a greater amount of electric power or to change its selected base stations (step A15).

Thereafter, the unit 531 updates the time storing unit with the time information which is appended to the currently received NG information (step A5).

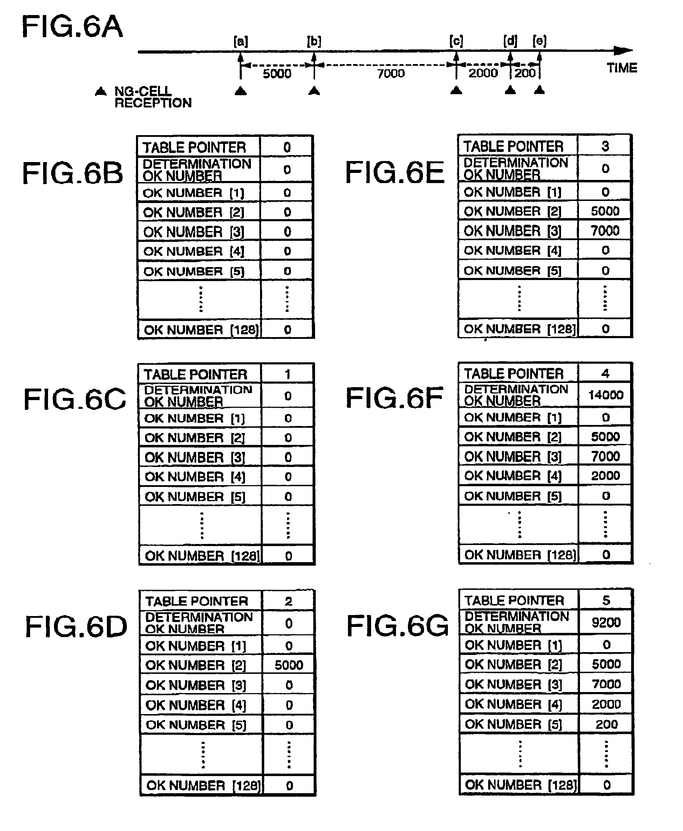

Now, description is made about operations related to the determination table 200 with reference to Fig. 6. When the NG-cell is received, the determination table 200 is updated through the following steps:
(1) a value in the table pointer field 201 is incremented by 1;
(2) the number of OK-cells between the NG-cells is stored into an entry of the OK number field 203. Herein, the entry is shown by the value of the table pointer field 201; and
(3) the determination OK number is calculated as described later and the resulting value is stored in the determination OK number field 202.

Herein, it is assumed that the degradation threshold value is set to 10,000 and the determination threshold value is set to four.

Fig. 6A shows reception timing of the NG-cells. An NG-cell is received at each of the time points [a] to [e] shown in Fig. 6A. In Fig. 6A, Values shown between two time points stands for estimated numbers of OK-cells received between the two time points.

Referring to Fig. 6B, the determination table 200 is shown when no NG-cell is received yet.

Fig. 6c shows the determination table 200 at the time point [a], that is, when the first NG-cell is received. In this case, only a value in the table pointer 201, which is set to zero as initial value, is incremented by one (as a result, = one).

Fig. 6D shows the determination table 200 at the time point [b], that is, when the second NG-cell is received. In this case, a value in the table pointer 201 is incremented by one (as a results, = two) and the OK number [2] is set to 5,000.

Fig. 6E shows the determination table 200 at the time point [c], that is, when the third NG-cell is received. In this case, a value in the table pointer 201 is incremented by one (as a result, = three) and the OK number [3] is set to 7,000.

Fig. 6F shows the determination table 200 at the time point [d], that is, when the forth NG-cell is received. In this case, a value in the table pointer 201 is incremented by one (as a result, = four) and the OK number [4] is set to 2,000. Further, since the number of received NG-cells (= four) is equal to the determination threshold value (- four), the determination OK number is obtained by adding the OK number [2], [3], and [4]. As a result, the determination OK number is set to 14,000 and is greater than the degradation threshold value (= 10,000), therefore, it is determined that the quality degradation does not occur.

Fig. 6G shows the determination table 200 at the time point [e], that is, when the fifth NG-cell is received. In this case, a value in the table pointer 201 is incremented by one (as a result, = five) and the OK number [5] is set to 200. Further, since the number of received NG-cells (= five) is greater than the determination threshold value (= four), the determination OK number is obtained by adding the OK number [3], [4], and [5]. As a result, the determination OK number is set to 9,200 and is less than the degradation threshold value (= 10,000), therefore, it is determined that the quality degradation occurs.

According to the invention, the quality degradation determining unit determines quality degradation of radio network only when an NG-cell which is checked as incorrect by CRC is received. Therefore, it is no need to execute quality degradation determining operation for every reception of a cell, as a result, overall operation performance is improved.

Also, even if there are periods which no cell is received under VOX control, inaccurate quality degradation determining operation using a past NG-cell reception history is not executed since the periods may be determined as periods which the OK-cells are received.

The above descriptions has been made with reference the embodiment of the invention, but it is clear that the scope of the invention is defined by the appended claims.

## Claims

1. A method of determining quality degradation of a radio network based on results of error detection from each of messages received through the network, the detection results including a first state representing detection of an error at a received message and a second state representing detecting no error at a received message, the method comprising the steps of:
storing first and second threshold values;
if a message of the first state is detected, comparing an accumulated number of detected messages of the first state with the first threshold value, and
if the accumulated number exceeds the first threshold value, estimating the number of messages of second state received since a previous detection of a message of the first state, and
determining that a quality degradation of the radio network occurs when the estimated number of messages of the second state is smaller than the second predetermined threshold value.

2. The method of determining quality degradation of the radio network claimed in claim 1, wherein the step of estimating the messages of the second state further comprises the steps of:
determining each duration time between a time related to one of the messages of the first state and another time related to the previous message of the first state :
calculating, for each duration time, the number of the messages of the second state received between the duration time by dividing the duration time by a message receiving cycle; and
summing up the numbers of the messages of the second state to obtain the overall numbers of the messages of the second state.

3. The method of determining quality degradation of the radio network claimed in claim 2, wherein the messages on the network are configured as calls which are provided on the radio network.

4. The method of determining quality degradation of the radio network claimed in one of claims 1 to 3, wherein the error detection is done by CRC.

5. The method of determining quality degradation of the radio network claimed in one of claims 1 to 4, wherein the method is applied to a CDMA mobile communication system.

6. A device of determining quality degradation of a radio network based on results of error detection from each of messages received through the network, the results including a first state representing detection of an error from a received message and a second state representing no detected error from a received message, the device comprising:
a detector (520) which detects the existence of messages of the first state and the second state,
a storage device (533) which stores a first and a second threshold value,
an estimating circuit (531) which estimates an accumulated number of received messages of the first state and compares the accumulated number with the first threshold value, and if the accumulated number exceeds the first threshold value, estimates the number of messages of the second state received since a previous detection of a message of the first state, and
a determining unit (531) which determines that a quality degradation of the radio network occurs when the determined number of received messages of the second state is less than the second threshold value.

7. The device of determining quality degradation of the radio network claimed in claim 6, wherein the storage device (533) further includes a message receiving cycle, and the estimating circuit (531) estimates the number of the messages of the second state by determining each duration time between a time related to one of the message of the first state and another time related to the previous messages of the first state, by calculating, for each duration time, the number of the messages of the second state by dividing the duration time by a message receiving cycle, and by summing up the numbers of the messages of the second state to obtain the overall numbers of the messages of the second state.

8. The device of determining quality degradation of the radio network claimed in claim 7, wherein the messages received through the network are configured as cells which are provided on the radio network.

9. The device of determining quality degradation of the radio network claimed in one ot claims 6 to 8, wherein the error detection is done by CRC.

10. The device of determining quality degradation of the radio network claimed in one of claims 6 to 9, wherein the device is applied to a CDMA mobile communication system.

11. A computer readable medium which stores a programme operable for determining quality degradation of a radio network by performing the method as claimed in anyone of claims 1 to 5.

12. A computer programme comprising programme code means adapted to performing the method steps of anyone of claims 1 to 5, when running on a computer.

## Patentansprüche

1. Verfahren zum Bestimmen der Qualitätsabnahme eines Funknetzes anhand von Ergebnissen der Fehlererfassung von jeder der über das Netz empfangenen Nachrichten, wobei die Erfassungsergebnisse einen ersten Zustand, der die Erfassung eines Fehlers in einer empfangenen Nachricht repräsentiert, und einen zweiten Zustand, der die Erfassung keines Fehlers in einer empfangenen Nachrichten repräsentiert, enthalten, wobei das Verfahren die folgenden Schritte umfasst:
Speichern eines ersten und eines zweiten Schwellenwertes;
falls eine Nachricht des ersten Zustandes erfasst wird, Vergleichen einer akkumulierten Anzahl erfasster Nachrichten des ersten Zustandes mit dem ersten Schwellenwert und
falls die akkumulierte Anzahl den ersten Schwellenwert übersteigt, Schätzen der Anzahl von Nachrichten des zweiten Zustandes, die seit einer früheren Erfassung einer Nachricht des ersten Zustandes empfangen wurden, und
Bestimmen, dass eine Qualitätsabnahme des Funknetzes auftritt, wenn die geschätzte Anzahl von Nachrichten des zweiten Zustandes kleiner als der zweite vorgegebene Schwellenwert ist.

2. Verfahren zum Bestimmen der Qualitätsabnahme des Funknetzes nach Anspruch 1, bei dem der Schritt des Schätzens der Nachrichten des zweiten Zustandes ferner die folgenden Schritte umfasst:
Bestimmen jeder Zeitdauer zwischen einem Zeitpunkt, der mit einer der Nachrichten des ersten Zustandes in Beziehung steht, und einem weiteren Zeitpunkt, der mit der früheren Nachricht des ersten Zustandes in Beziehung steht;
für jede Zeitdauer Berechnen der Anzahl der Nachrichten des zweiten Zustandes, die in der Zeitdauer empfangen wurden, indem die Zeitdauer durch einen Nachrichtenempfangszyklus dividiert wird; und
Aufsummieren der jeweiligen Anzahl der Nachrichten des zweiten Zustandes, um die Gesamtanzahl der Nachrichten des zweiten Zustandes zu erhalten.

3. Verfahren zum Bestimmen der Qualitätsabnahme des Funknetzes nach Anspruch 2, bei dem die Nachrichten in dem Netz als Zellen konfiguriert sind, die auf dem Funknetz bereitgestellt werden.

4. Verfahren zum Bestimmen der Qualitätsabnahme des Funknetzes nach einem der Ansprüche 1 bis 3, bei dem die Fehlererfassung durch CRC erfolgt.

5. Verfahren zum Bestimmen der Qualitätsabnahme des Funknetzes nach einem der Ansprüche 1 bis 4, wobei das Verfahren auf ein CDMA-Mobilkommunikationssystem angewendet wird.

6. Vorrichtung zum Bestimmen der Qualitätsabnahme eines Funknetzes anhand von Ergebnissen der Fehlererfassung von jeder der über das Netz empfangenen Nachrichten, wobei die Ergebnisse einen ersten Zustand, der die Erfassung eines Fehlers von einer empfangenen Nachricht repräsentiert, und einen zweiten Zustand, der die Erfassung keines Fehlers von einer empfangenen Nachricht repräsentiert, enthält, wobei die Vorrichtung umfasst:
einen Detektor (520), der das Vorhandensein von Nachrichten des ersten Zustandes und des zweiten Zustandes erfasst,
eine Speichervorrichtung (533), die einen ersten und einen zweiten Schwellenwert speichert,
eine Schätzschaltung (531), die eine akkumulierte Anzahl empfangener Nachrichten des ersten Zustandes schätzt und die akkumulierte Anzahl mit dem ersten Schwellenwert vergleicht und dann, wenn die akkumulierte Anzahl den ersten Schwellenwert übersteigt, die Anzahl der Nachrichten des zweiten Zustandes schätzt, die seit einer früheren Erfassung einer Nachricht des ersten Zustandes empfangen wurden, und
eine Bestimmungseinheit (531), die feststellt, dass eine Qualitätsabnahme des Funknetzes auftritt, wenn die bestimmte Anzahl empfangener Nachrichten des zweiten Zustandes niedriger als der zweite Schwellenwert ist.

7. Vorrichtung zum Bestimmen der Qualitätsabnahme des Funknetzes nach Anspruch 6, bei der die Speichervorrichtung (533) ferner einen Nachrichtenempfangszyklus enthält und die Schätzschaltung (531) die Anzahl der Nachrichten des zweiten Zustandes schätzt, indem sie jede Zeitdauer zwischen einem Zeitpunkt, der mit einer der Nachrichten des ersten Zustandes in Beziehung steht, und einem weiteren Zeitpunkt, der mit den früheren Nachrichten des ersten Zustandes in Beziehung steht, bestimmt, wobei sie für jede Zeitdauer die Anzahl der Nachrichten des zweiten Zustandes durch Dividieren der Zeitdauer durch einen Nachrichtenempfangszyklus berechnet, und indem sie die jeweilige Anzahl der Nachrichten des zweiten Zustandes aufsummiert, um die Gesamtanzahl der Nachrichten des zweiten Zustandes zu erhalten.

8. Vorrichtung zum Bestimmen der Qualitätsabnahme des Funknetzes nach Anspruch 7, bei der die über das Netz empfangenen Nachrichten als Zellen konfiguriert sind, die auf dem Funknetz bereitgestellt werden.

9. Vorrichtung zum Bestimmen der Qualitätsabnahme des Funknetzes nach einem der Ansprüche 6 bis 8, bei der die Fehlererfassung durch CRC erfolgt.

10. Vorrichtung zum Bestimmen der Qualitätsabnahme des Funknetzes nach einem der Ansprüche 6 bis 9, wobei die Vorrichtung auf ein CDMA-Mobilkommunikationssystem angewendet wird.

11. Computerlesbares Medium, das ein Programm speichert, das so betreibbar ist, dass es die Qualitätsabnahme eines Funknetzes durch Ausführen des Verfahrens nach einem der Ansprüche 1 bis 5 bestimmt.

12. Computerprogramm, das Programmcodemittel enthält, die so beschaffen sind, dass sie die Verfahrensschritte nach einem der Ansprüche 1 bis 5 ausführen, wenn sie auf einem Computer ablaufen.

## Revendications

1. Procédé pour déterminer la détérioration de la qualité d'un réseau de radiocommunications sur la base de résultats de détection d'erreurs à partir de chacun de messages reçus à travers le réseau, les résultats de détection comprenant un premier état représentant la détection d'une erreur au niveau d'un message reçu et un deuxième état représentant la détection d'aucune erreur au niveau d'un message reçu, le procédé comprenant les étapes consistant à :
mémoriser des première et deuxième valeurs de seuil ;
si un message du premier état est détecté, comparer un nombre accumulé de messages détectés du premier état avec la première valeur de seuil, et
si le nombre accumulé dépasse la première valeur de seuil, estimer le nombre de messages de deuxième état reçus depuis une détection précédente d'un message du premier état, et
déterminer qu'une détérioration de la qualité du réseau de radiocommunications se produit quand le nombre estimé de messages du deuxième état est inférieur à la deuxième valeur de seuil prédéterminée.

2. Procédé pour déterminer la détérioration de la qualité d'un réseau de radiocommunications selon la revendication 1, dans lequel l'étape consistant à estimer les messages du deuxième état comprend en outre les étapes consistant à :
déterminer chaque temps de durée entre un instant relatif à un des messages du premier état et un autre instant relatif au message précédent du premier état,
calculer, pour chaque temps de durée, le nombre des messages du deuxième état reçus dans le temps de durée en divisant le temps de durée par un cycle de réception de messages ; et
additionner les nombres des messages du deuxième état pour obtenir les nombres totaux de messages du deuxième état.

3. Procédé pour déterminer la détérioration de la qualité d'un réseau de radiocommunications selon la revendication 2, dans lequel les messages sur le réseau sont configurés comme des cellules qui sont fournies sur le réseau de radiocommunications.

4. Procédé pour déterminer la détérioration de la qualité d'un réseau de radiocommunications selon l'une des revendications 1 à 3, dans lequel la détection d'erreurs est effectuée par contrôle de redondance cyclique.

5. Procédé pour déterminer la détérioration de la qualité d'un réseau de radiocommunications selon l'une des revendications 1 à 4, dans lequel le procédé est appliqué à un système de communication mobile à accès multiple par répartition de code.

6. Dispositif pour déterminer la détérioration de la qualité d'un réseau de radiocommunications sur la base de résultats de détection d'erreurs à partir de chacun de messages reçus à travers le réseau, les résultats comprenant un premier état représentant la détection d'une erreur provenant d'un message reçu et un deuxième état représentant la détection d'aucune erreur provenant d'un message reçu, le dispositif comprenant :
un détecteur (520) qui détecte l'existence de messages du premier état et du deuxième état,
un dispositif de mémoire (533) qui mémorise une première et une deuxième valeur de seuil,
un circuit d'estimation (531) qui estime un nombre accumulé de messages reçus du premier état et compare le nombre accumulé avec la première valeur de seuil, et si le nombre accumulé dépasse la première valeur de seuil, estime le nombre de messages du deuxième état reçus depuis une détection précédente d'un message du premier état, et
une unité de détermination (531) qui détermine qu'une détérioration de la qualité du réseau de radiocommunications se produit quand le nombre estimé de messages reçus du deuxième état est inférieur à la deuxième valeur de seuil.

7. Dispositif pour déterminer la détérioration de la qualité d'un réseau de radiocommunications selon la revendication 6, dans lequel le dispositif de mémoire (533) comprend en outre un cycle de réception de messages, et le circuit d'estimation (531) estime le nombre des message du deuxième état en déterminant chaque temps de durée entre un instant relatif à un des messages du premier état et un autre instant relatif au message précédent du premier état, en calculant, pour chaque temps de durée, le nombre des messages du deuxième état en divisant le temps de durée par un cycle de réception de messages, et en additionnant les nombres des messages du deuxième état pour obtenir les nombres totaux de messages du deuxième état.

8. Dispositif pour déterminer la détérioration de la qualité d'un réseau de radiocommunications selon la revendication 7, dans lequel les messages reçus à travers le réseau sont configurés comme des cellules qui sont fournies sur le réseau de radiocommunications.

9. Dispositif pour déterminer la détérioration de la qualité d'un réseau de radiocommunications selon l'une des revendications 6 à 8, dans lequel la détection d'erreurs est effectuée par contrôle de redondance cyclique.

10. Dispositif pour déterminer la détérioration de la qualité d'un réseau de radiocommunications selon l'une des revendications 6 à 9, dans lequel le dispositif est appliqué à un système de communication mobile à accès multiple par répartition de code.

11. Support lisible par ordinateur qui mémorise un programme exploitable pour déterminer la détérioration de la qualité d'un réseau de radiocommunications en exécutant le procédé selon l'une quelconque des revendications 1 à 5.

12. Programme d'ordinateur comprenant des moyens de code de programme adapté pour exécuter les étapes de procédé de l'une quelconque des revendications 1 à 5, quand il tourne sur un ordinateur.
